# EUROPÄISCHE PATENTSCHRIFT

(11) **EP 2 603 882 B1**
(45) Veröffentlichungstag und Bekanntmachung des Hinweises auf die Patenterteilung: **10.09.2014**
(21) Anmeldenummer: 10810734.3
(22) Anmeldetag: 07.12.2010
(51) Int. Cl.: G06K 19/077, H01Q 1/22

(54) **TRANSPONDER**
TRANSPONDER
TRANSPONDEUR

(30) Priorität: 11.08.2010 DE 202010011285 U
(43) Veröffentlichungstag der Anmeldung: 19.06.2013
(73) Patentinhaber: Tagitron GmbH, 33154 Salzkotten (DE)
(72) Erfinder: Wendisch, Karl-Heinz, 33154 Salzkotten (DE)
(74) Vertreter: Ostermann, Thomas
(86) Internationale Anmeldenummer: PCT/DE2010/001419
(87) Internationale Veröffentlichungsnummer: WO 2012/019571

(56) Entgegenhaltungen:
- GB-A- 2 467 185
- US-A1- 2007 095 926

## Beschreibung

Die Erfindung betrifft einen Transponder nach dem Oberbegriff des Anspruchs 1.

Die Entwicklung der funkbasierten Identifikation von Objekten durch den Einsatz der RFID-Technik (Radio FrequencyIdentification) ist durch das Bestreben gekennzeichnet, die Systemkomponente, die am Objekt angebracht werden muss, und die man als Transponder bezeichnet, so aufzubauen, dass mit einem Minimum an Aufwand eine möglichst große Reichweite erzielt werden kann. Ältere Systeme arbeiten mit einem niedrigen Frequenzbereich von wenigen kHz (z.B. 125kHz) bis zu einigen MHz (13,56MHz). Diese Systeme koppeln wegen der großen Wellenlänge die Kommunikation von Lesestation und Transponder mit dem magnetischen Feld. Die Reichweite ist dementsprechend gering.

Eine wesentliche Steigerung der Reichweite erreicht man mit dem Übergang in den UHF-Bereich (860/915MHz) bzw. den Mikrowellenbereich (2,4GHz) Hier beträgt die Wellenlängen 30cm bzw. 12,5cm. Die Antennen sind dementsprechend kleiner und die Ausbreitung als elektromagnetische Welle ist in wesentlich kleineren Distanzen gegeben, so dass die Reichweite auch größer wird.

Unter anderem ist aus der Offenlegungsschrift DE 11 2008 000 065 T5 der Grundaufbau einer Transpondereinheit, bestehend aus einem IC, der für die drahtlose Kommunikation ausgelegt ist, einem Speiseschaltungssubstrat, auf dem eine Speiseschaltung aufgebracht ist, die im Wesentlichen aus einer induktiven Leiterschleife und ggf. einer Kapazität besteht, mit der beide Komponenten zu einem Schwingkreis verbunden werden und einer Strahlungsplatte, die mit dem Schwingkreis im Wesentlichen magnetisch gekoppelt ist. Führt man nun ein solches System aus, dann stellt man fest, dass die Platte für verschiedene Anwendungen ungeeignet ist. Insbesondere, wenn man das System einfach in Objekte integrieren will, sind plattenförmige Konstruktionen wenig geeignet. Eine einfache Integration beispielsweise in Holzpaletten erlaubt die Bauausführung als Nagel. Hier ist der Einsatz der 125kHz-Technik sehr verbreitet. Als Beispiel können hier Produkte der Fa. OPAL Associates Holding AG, Wetzikon (CH) genannt werden. Transponder dieser Technik haben aber wegen der Betriebsfrequenz nur eine geringe Reichweite.

Aus der US 2007/0095926 A1 ist ein Transponder mit einem IC-Baustein und einer Antenne bekannt. Diese Antenne steht mit einer weiteren Antenne in Wirkverbindung. Beide Antennen verlaufen jedoch flächig in einer gemeinsamen Ebene.

Aus der GB 2 467 185 A ist ein Transponder bekannt, der einen IC-Baustein und eine Antenne aufweist. Dieser Trans ponder ist an einem zylindrischen Gegenstand befestigt, wobei die Antenne diesen zylindrischen Gegenstand umgibt.

Aufgabe der vorliegenden Erfindung ist es, einen Transponder derart weiterzubilden, dass er unter Ausnutzung der Vorteile einer hohen Lesereichweite einer UHF-Technik eine kompakte Bauform aufweist.

Zur Lösung dieser Aufgabe weist der Transponder die Merkmale des Anspruchs 1 auf.

Der besondere Vorteil der Erfindung besteht darin, dass der Transponder einen kompakten Aufbau aufweist. Eine äußere Form des Transponders wird durch die rohrförmige Form einer eine Transponder-Schaltung umgebenden Antenne geprägt. Der Transponder hat einen sehr einfachen Aufbau und ermöglicht eine einfache Anbringung bzw. Integration in anderen Bauteilen. Da die den IC-Baustein und die Antenne aufweisende Transponder-Schaltung innerhalb der rohrförmigen Antenne angeordnet ist, ist die Transponder-Schaltung vor mechanischen Beanspruchungen geschützt.

Weitere Vorteile der Erfindung ergeben sich aus den weiteren Unteransprüchen.

Ausführungsbeispiele der Erfindung werden nachfolgend anhand der Zeichnungen näher erläutert.

Es zeigen:
- Figur 1: eine Explosionsdarstellung eines Transponders nach einer ersten Ausführungsform,
- Figur 2: eine Explosionsdarstellung des Transponders nach einer zweiten Ausführungsform und
- Figur 3: eine schematische Darstellung einer magnetischen Flussdichteverteilung in einem Innenraum der zweiten spiralförmigen Antenne nach dem Transponder gemäß der zweiten Ausführungsform.

Ein Transponder 1 besteht zum einen aus einer Schaltung (Transponder-Schaltung) mit einem Schaltungsträger 2, der einen IC-Baustein 3 und eine erste Antenne 4 aufweist. Der Schaltungsträger 2 kann beispielsweise als starre oder flexible Leiterplatte ausgebildet sein. Der IC-Baustein 3 ist als ein Chip ausgebildet, der elektrisch mit der ersten Antenne 4 verbunden ist. Der IC-Baustein 3 und/oder die erste Antenne 4 kann durch Aufdrucken oder dergleichen auf der Leiterplatte 2 angebracht sein.

Zum anderen weist der Transponder 1 eine weitere Antenne auf, die als ein rohrförmiger Körper 5 ausgebildet ist.

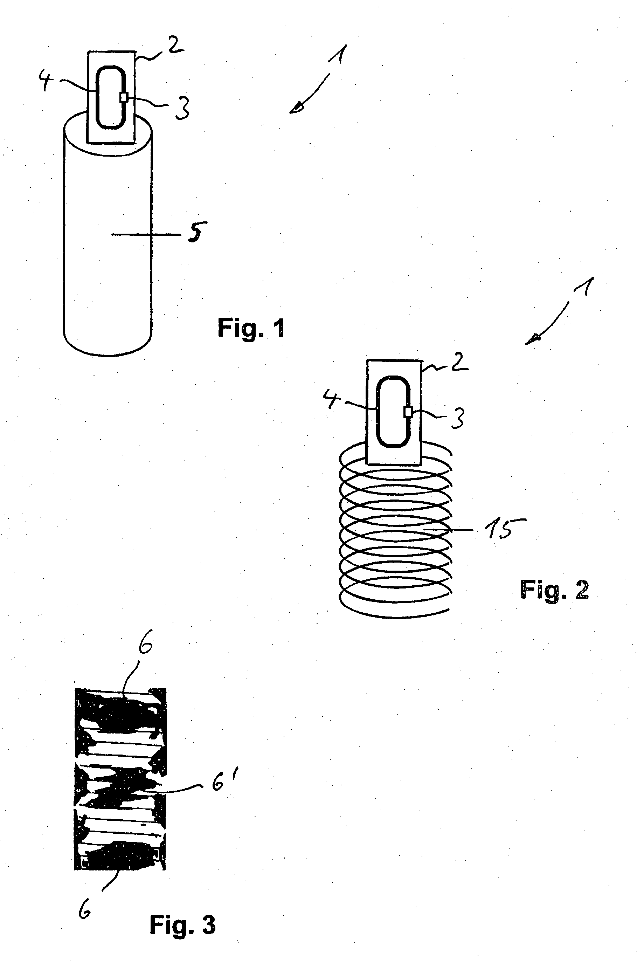

Zur Montage des Transponders 1 wird der Schaltungsträger 2 in einen Innenraum des rohrförmigen Körpers 5 eingeschoben bzw. eingebracht. Der Schaltungsträger 2 wird vorzugsweise in Bereichen 6, 6' des rohrförmigen Körpers 5 positioniert, in denen sich eine relativ hohe magnetische Flussdichte ausbildet, siehe Figur 3. Im vorliegenden Ausführungsbeispiel würde der Schaltungsträger 2 in stirnseitenendnahen Bereichen 6 oder in der Mitte 6' positioniert sein. Da die magnetische Flussdichte im mittleren Bereich 6' am größten ist, wird der Schaltungsträger 2 mit seiner Antenne 4 vorzugsweise in der Mitte des rohrförmigen Körpers 5 positioniert. Befindet sich der Transponder 1 in einem elektromagnetischen Feld eines Lesegerätes, dient der rohrförmige Körper als Strahler des zu übertragenden Hochfrequenzsignals an die erste Antenne 4, wobei durch die magnetische Kopplung zwischen der ersten Antenne 4 und dem rohrförmigen Körper 5 das Hochfrequenzsignal im UHF-Bereich (868 MHz) von der Antenne 4 des Schaltungsträgers 2 empfangen werden kann. Die Antenne 4 des Schaltungsträgers 2 ist auf die Arbeitsfrequenz 860 MHz bis 915 MHz abgestimmt. Hierbei bildet die Antenne 4 zusammen mit dem kapazitiv wirkenden IC-Baustein 3 einen Resonanzkreis, so dass das Hochfrequenzsignal in die Antenne 4 eingekoppelt werden kann.

Der rohrförmige Körper 5 kann nach einer ersten Ausführungsform gemäß Figur 1 als ein Hohlzylinder ausgebildet sein, der aus einem Metallmaterial besteht. Wenn der Schaltungsträger 2 flexibel ausgebildet ist, kann ein Durchmesser des hohlzylinderförmigen Körpers 5 kleiner sein als eine Länge oder Breite des Schaltungsträgers 2. Der Schaltungsträger 2 wird dann im vorzugsweise zu einer Rolle verbogenen Zustand in den Hohlraum des Hohlzylinders 5 eingeschoben und vorzugsweise in dem mittleren Bereich 6' positioniert.

Nach einer zweiten Ausführungsform des Transponders 1 gemäß Figur 2 kann der rohrförmige Körper als ein Spiralkörper 15 ausgebildet sein, der aus einem wendelförmig bzw. schraubenförmig verdrehten, gewickelten Runddrahtmaterial vorzugsweise aus Stahl besteht. Der Spiralkörper 15 kann die gleiche Dimension aufweisen wie der hohlzylinderförmige Körper 5. Vorteilhaft kann bei Montage des Transponders 1 durch Änderung des Abstandes der Windungen und/oder des Durchmessers derselben eine Abstimmung der hierdurch gebildeten zweiten Antenne 15 an die Resonanzfrequenz des Schaltungsträgers 2 erfolgen.

Der Spiralkörper 15 kann aus einem Federdraht (Runddraht) gewickelt sein. Alternativ kann er auch aus flachen Metallstreifen (im Querschnitt rechteckförmig) gewickelt sein. Vorteilhaft kann der Spiralkörper 15 innerhalb flexibler weiterer Bauteile integriert angeordnet sein. Beispielsweise kann der den Spiralkörper 15 aufweisende Transponder 1 in ein Bauteil aus einem elastischen oder festen Kunststoff eingespritzt bzw. eingegossen sein. Hierdurch lassen sich Stifte, Nägel oder Schrauben herstellen, in denen die Transponderfunktion umgesetzt ist.

Vorzugsweise wird der Schaltungsträger 2 in einer Resonanz betrieben.

Gleiche Bauteile bzw. Bauteilfunktionen der Ausführungsbeispiele sind mit den gleichen Bezugsziffern versehen.

Nach einer nicht dargestellten weiteren Ausführungsform der Erfindung kann der rohrförmige Körper 5 quer mit einem oder mit mehreren Schlitzen versehen sein.

Nach einer nicht dargestellten weiteren Ausführungsform der Erfindung kann der rohrförmige Körper zusammen mit der Schaltung ein Vergussteil bilden mit einem runden oder vieleckigen Querschnitt, wobei Außenwände des Vergussteils glatt oder mit Verspreizungen versehen sind derart, dass das Vergussteil als ein Dübel zur Verankerung in einer Wand einsetzbar ist. Das Vergussteil besteht aus einem Kunststoffmaterial und kann den Durchmesser einer genormten Schraubenreihe mit einem außen aufgebrachten Gewinde aufweisen.

Der Spiralkörper weist an mindestens einer Stirnseite Drahtenden auf, die in axialer und/oder radialer Richtung weitergeführt sind. Diese Drahtenden ermöglichen eine besser Einkopplung.

## Patentansprüche

1. Transponder mit einem Schaltungsträger, der einen IC-Baustein und eine Antenne aufweist zur Bildung einer Schaltung, und mit einer der Antenne des Schaltungsträgers in Wirkverbindung stehenden weiteren Antenne, **dadurch gekennzeichnet, dass** die weitere Antenne (5, 15) als ein rohrförmiger Körper (5, 15) ausgebildet ist und dass die Antenne (4) des Schaltungsträgers (2) innerhalb der weiteren Antenne (5, 15) angeordnet ist.

2. Transponder nach Anspruch 1, **dadurch gekennzeichnet, dass** der rohrförmige Körper (5, 15) quer mit einem oder mit mehreren Schlitzen versehen ist.

3. Transponder nach Anspruch 1 oder 2, **dadurch gekennzeichnet, dass** der Schaltungsträger aus einem flexiblen, isolierenden Material ausgebildet ist derart, dass er durch Verbiegen oder Einrollen in den rohrförmigen Körper (5, 15) einbringbar ist.

4. Transponder nach Anspruch 1 oder 2, **dadurch gekennzeichnet, dass** der Schaltungsträger (2) als eine starre Leiterplatte ausgebildet ist.

5. Transponder nach einem der Ansprüche 1 bis 4, **dadurch gekennzeichnet, dass** der rohrförmige Körper als ein Spiralkörper (15) mit einen spiralförmig gewickelten Draht oder flachen Metallstreifen ausgebildet ist.

6. Transponder nach einem der Ansprüche 1 bis 5, **dadurch gekennzeichnet, dass** eine Länge des Spiralkörpers (15) so gewählt ist, dass sie der halben Wellenlänge der Arbeitsfrequenz der Schaltung oder dem Vielfachen der halben Wellenlänge derselben entspricht.

7. Transponder nach einem der Ansprüche 1 bis 6, **dadurch gekennzeichnet, dass** der Spiralkörper (15) aus einem Federdraht gewickelt ist.

8. Transponder nach einem der Ansprüche 1 bis 7, **dadurch gekennzeichnet, dass** der Schaltungsträger (2) mit dem rohrförmigen Körper (5, 15) mittels eines isolierenden Materials vergossen oder verspritzt ist.

9. Transponder nach einem der Ansprüche 1 bis 8, **dadurch gekennzeichnet, dass** der rohrförmige Körper (5, 15) zusammen mit der Schaltung ein Vergussteil bildet mit einem runden oder vieleckigen Querschnitt, wobei Außenwände des Vergussteils glatt oder mit Verspreizungen versehen sind derart, dass das Vergussteil als ein Dübel einsetzbar ist.

10. Transponder nach einem der Ansprüche 1 bis 9, **dadurch gekennzeichnet, dass** das Vergussteil aus einem Kunststoffmaterial besteht und den Durchmesser einer genormten Schraubenreihe mit einem außen aufgebrachten Gewinde aufweist.

11. Transponder nach einem der Ansprüche 1 bis 10, **dadurch gekennzeichnet, dass** das das Vergussteil aus einem elastischen Vergussmaterial besteht.

12. Transponder nach einem der Ansprüche 1 bis 11, **dadurch gekennzeichnet, dass** der Spiralkörper (15) an mindestens einer Stirnseite Drahtenden aufweist, die in axialer und/oder radialer Richtung weitergeführt ist.

## Claims

1. A transponder with a circuit carrier having an IC component and an antenna for forming a circuit, and with a further antenna in operative connection to the antenna of the circuit carrier, **characterized in that** the further antenna (5, 15) is designed as a tubular body (5, 15) and the antenna (4) of the circuit carrier (2) is disposed within the further antenna (5, 15).

2. The transponder according to claim 1, **characterized in that** the tubular body (5, 15) is provided with one or more slits in the transverse direction.

3. The transponder according to claim 1 or 2, **characterized in that** the circuit carrier is designed from a flexible, insulating material such that it can be introduced into the tubular body (5, 15) by bending it or rolling it up.

4. The transponder according to claim 1 or 2, **characterized in that** the circuit carrier (2) is designed as a rigid circuit board.

5. The transponder according to any one of claims 1 to 4, **characterized in that** the tubular body is designed as a spiral body (15) having a spirally wound wire or flat metal strip.

6. The transponder according to any one of claims 1 to 5, **characterized in that** a length of the spiral body (15) is selected so as to correspond to half the wavelength of the working frequency of the circuit or a multiple of half the wavelength thereof.

7. The transponder according to claim 1 to 6, **characterized in that** the spiral body (15) is wound from a spring wire.

8. The transponder according to any one of claims 1 to 7, **characterized in that** the circuit carrier (2) is cast or injection-molded to the tubular body (5, 15) by means of an insulating material.

9. The transponder according to any one of claims 1 to 8, **characterized in that** the tubular body (5, 15) forms a cast part together with the circuit, said cast part having a round or polygonal cross-section, wherein exterior walls of the cast part are smooth or provided with anchoring wedges such that the cast part can be used as a dowel.

10. The transponder according to any one of claims 1 to 9, **characterized in that** the cast part consists of a plastic material and has the diameter of a standardized row of bolts with an externally applied thread.

11. The transponder according to any one of claims 1 to 10, **characterized in that** the cast part consists of an elastic casting material.

12. The transponder according to any one of claims 1 to 11, **characterized in that** the spiral body (15) has wire ends on at least one face side, said wire ends being continued in the axial and/or radial direction.

## Revendications

1. Transpondeur avec un substrat de circuit qui est doté d'un module IC et d'une antenne pour la formation d'un circuit, et avec une autre antenne qui coopère avec l'antenne du substrat de circuit, **caractérisé en ce que** l'autre antenne (5, 15) est réalisée sous la forme d'un corps tubulaire (5, 15) et que l'antenne (4) du substrat de circuit (2) est disposée à l'intérieur de l'autre antenne (5, 15).

2. Transpondeur selon la revendication 1, **caractérisé en ce que** le corps tubulaire (5, 15) est transversalement pourvu d'une fente ou de plusieurs fentes.

3. Transpondeur selon revendication 1 ou 2, **caractérisé en ce que** le substrat de circuit est formé à partir d'une matière isolante, flexible de sorte qu'il puisse être introduit dans le corps tubulaire (5, 15) par flexion ou enroulement.

4. Transpondeur selon revendication 1 ou 2, **caractérisé en ce que** le substrat de circuit (2) est réalisé sous la forme d'une plaquette de circuits imprimés rigide.

5. Transpondeur selon l'une des revendications 1 à 4, **caractérisé en ce que** le corps tubulaire est fabriqué, sous la forme d'un corps spiralé (15), avec un fil métallique ou avec un ruban métallique, plat, enroulé en spirale.

6. Transpondeur selon l'une des revendications 1 à 5, **caractérisé en ce qu'**une longueur du corps spiralé (15) est choisie telle qu'elle corresponde à la demi-longueur d'onde de la fréquence de travail du circuit ou au multiple de la demi-longueur d'onde de celle-ci.

7. Transpondeur selon l'une des revendications 1 à 6, **caractérisé en ce que** le corps spiralé (15) est réalisé par enroulement d'un fil pour ressort.

8. Transpondeur selon l'une des revendications 1 à 7, **caractérisé en ce que** le substrat de circuit (2) est coulé ou extrudé avec le corps tubulaire (5, 15) au moyen d'une matière isolante.

9. Transpondeur selon l'une des revendications 1 à 8, **caractérisé en ce que** le corps tubulaire (5, 15) forme, en commun avec le circuit, une pièce coulée dotée d'un section transversale ronde ou polygonale, sachant que des parois extérieures de la pièce coulée sont lisses ou pourvues d'expansions de telle manière que la pièce coulée puisse être utilisée en tant que goujon.

10. Transpondeur selon l'une des revendications 1 à 9, **caractérisé en ce que** la pièce coulée consiste en une matière synthétique et présente le diamètre d'une rangée de vis normalisée avec un filet appliqué à l'extérieur.

11. Transpondeur selon l'une des revendications 1 à 10, **caractérisé en ce que** la pièce coulée consiste en matière de coulée élastique.

12. Transpondeur selon l'une des revendications 1 à 11, **caractérisé en ce que** le corps spiralé (15) présente, sur au moins un côté frontal, des extrémités de fils qui se prolongent dans la direction axiale et / ou radiale.
